# EUROPEAN PATENT APPLICATION

(11) **EP 4 613 814 A1**
(43) Date of publication of application: **10.09.2025**
(21) Application number: 23885459.0
(22) Date of filing: 06.10.2023
(51) Int. Cl.: C08L 101/00, C08L 1/00

(54) **RESIN COMPOSITION AND METHOD FOR PRODUCING RESIN COMPOSITION**

(30) Priority: 31.10.2022 JP 2022174210
(71) Applicant: Nippon Paper Industries Co., Ltd., Tokyo 114-0002 (JP)
(72) Inventor: YAMAMOTO Nobuhiko, Tokyo 114-0002 (JP); INOUE Ryota, Tokyo 114-0002 (JP)
(74) Representative: Kuhnen & Wacker Patent- und Rechtsanwaltsbüro PartG mbB
(86) International application number: PCT/JP2023/036522
(87) International publication number: WO 2024/095696

(57) **Abstract**

Provided is a resin composition containing pulp, a thermoplastic resin modified with a hydrophilic functional group, and a thermoplastic resin which is not modified with a hydrophilic functional group, the resin composition satisfying any of the following conditions:
(condition 1) an elastic modulus of 2 GPa or more and an impact strength of 4.5 kJ/m² or more;
(condition 2) an elastic modulus of 1 GPa or more and an impact strength of 8 kJ/m² or more; and
(condition 3) an elastic modulus of 3 GPa or more and an impact strength of 3.5 kJ/m² or more.

## Description

### Technical Field

The present invention relates to a resin composition containing pulp fibers, and a method for producing the resin composition.

### Background Art

Biomass resources have attracted attention from the viewpoint of sustainable utilization of forest resources, and reduction of emissions and weight reduction of global warming substances and environmentally hazardous substances.

Studies have been conducted to produce a fiber-reinforced resin by combining plant fibers, which are such a biomass resource, and a thermoplastic resin.

Patent Literature 1 discloses that it is possible to produce a composite resin composition which contains a polypropylene-based resin and plant fibers having little amount of organic solvent-extractable components and which thus undergoes little curvature deformation and has reduced coating defects caused by bleed-out.

### Citation List

### Patent Literature

Patent Literature 1: JP 2011-21087 A

### Summary of Invention

### Technical Problem

A resin composition obtained by combining plant fibers and a thermoplastic resin has a problem that the bending elastic modulus and the impact strength are in a trade-off relationship, and difficult to secure at the same time.

An object of the present invention is to provide a resin composition which has high bending strength and a high bending elastic modulus, which are well balanced with impact strength. Another object of the present invention is to provide a method for producing a resin composition capable of obtaining the resin composition.

### Solution to Problem

The present invention provides the following.
(1) A resin composition including pulp, a thermoplastic resin modified with a hydrophilic functional group, and a thermoplastic resin which is not modified with a hydrophilic functional group, the resin composition satisfying any of the following conditions:
   (condition 1) an elastic modulus of 2 GPa or more and an impact strength of 4.5 kJ/m² or more;
   (condition 2) an elastic modulus of 1 GPa or more and an impact strength of 8 kJ/m² or more; and
   (condition 3) an elastic modulus of 3 GPa or more and an impact strength of 3.5 kJ/m² or more.
(2) The resin composition according to (1), in which the pulp includes pulp derived from one or more tree species selected from the group consisting of Eucalyptus, Larix, Pinus, Pseudotsuga, Picea, Cryptomeria, Cunninghamia, Chamaecyparis and Acacia.
(3) A method for producing a resin composition, including a kneading step of kneading the following (A) to (C):
   (A) pulp in which a proportion of pulp fibers with a fiber length of 0.2 mm or less in all pulp fibers is 30% or less, and an average kink angle is 55 degrees or more;
   (B) a thermoplastic resin modified with a hydrophilic functional group; and
   (C) a thermoplastic resin which is not modified with a hydrophilic functional group.
(4) The method for producing a resin composition according to (3), in which an average aspect ratio of the (A) pulp is 10 or more and less than 100.
(5) The method for producing a resin composition according to (3), in which in the kneading step, the kneading is performed in a temperature range including at least that of a 100°C or higher and no higher than a melting point of one of the resins (B) and (C) which has the highest melting point.
(6) The method for producing a resin composition according to (3), in which the mass of water contained in the (A) pulp is 50 mass% or less with respect to total solid content mass of the (A) to (C).

### Advantageous Effects of Invention

According to the present invention, it is possible to provide a resin composition which has high bending strength and a high bending elastic modulus, which are well balanced with impact strength. In addition, it is possible to provide a method for producing a resin composition capable of obtaining the resin composition.

### Description of Embodiments

Hereinafter, a method for producing a resin composition of the present invention will be described. In the present invention, a range of one value "to" another includes the end values. That is, a range of "X to Y" includes both the values X and Y.

### (Resin composition)

The resin composition of the present invention includes pulp, a thermoplastic resin modified with a hydrophilic functional group, and a thermoplastic resin which is not modified with a hydrophilic functional group, and the resin composition satisfies any of the following conditions:
(condition 1) an elastic modulus of 2 GPa or more and an impact strength of 4.5 kJ/m² or more;
(condition 2) an elastic modulus of 1 GPa or more and an impact strength of 8 kJ/m² or more; and
(condition 3) an elastic modulus of 3 GPa or more and an impact strength of 3.5 kJ/m² or more.

In the resin composition of the present invention, the values of the elastic modulus and impact strength satisfy the above-described specific conditions. In the present invention, the term "elastic modulus" means an elastic modulus obtained by a bending test, and the term "impact strength" means impact strength obtained by an Izod impact test.

The resin composition of the present invention can be obtained by kneading a material containing pulp, a thermoplastic resin modified with a hydrophilic functional group, and a thermoplastic resin which is not modified with a hydrophilic functional group. A specific method for producing a resin composition of the present invention will be described below.

### (Method for producing resin composition)

The method for producing a resin composition according to the present invention includes a kneading step of kneading the following (A) to (C):
(A) pulp in which a proportion of pulp fibers with a fiber length of 0.2 mm or less in all pulp fibers is 30% or less, and an average kink angle is 55 degrees or more;
(B) a thermoplastic resin modified with a hydrophilic functional group; and
(C) a thermoplastic resin which is not modified with a hydrophilic functional group.

### (A) Pulp

In the (A) pulp for use in the method for producing a resin composition according to the present invention, the proportion of pulp fibers with a fiber length of 0.2 mm or less in all pulp fibers is 30% or less, and the average kink angle is 55 degrees or more. In the present specification, the pulp fiber with a fiber length of 0.2 mm or less may be referred to as a "fine content".

In the present invention, the proportion of the fine content in all pulp fibers is 30% or less, preferably 27% or less, and more preferably 24% or less for exhibiting a reinforcing effect by long fibers. An excessively large amount of the fine content may lead to a decrease in reinforcing effect. The lower limit value of the proportion of the fine content is preferably 0.1% or more, and more preferably 1% or more. The proportion of the fine content can be measured with, for example, a fiber tester manufactured by Lorentzen & Wettre Ltd. after the pulp is sufficiently disintegrated in water.

In the (A) pulp for use in the present invention, the average kink angle in all pulp fibers is 55 degrees or more, preferably 58 degrees or more and 150 degrees or less, and more preferably 60 degrees or more and 120 degrees or less for providing origination points of formation of voids that absorbs energy in exposure to stress. Although the details are unknown, it is considered that when the interface between the resin and the pulp fibers peels off, fine pores (voids) are easily formed on the periphery because the fibers are bent, and the voids contribute to improvement of impact strength. If the average kink angle is excessively small, energy absorption may be unsuccessful, leading to a decrease in impact strength. If the average kink angle is excessively large, the fibers are considered to be similar to those having a low aspect ratio, and may not exhibit a sufficient reinforcing effect that is expected of long fibers. In the present invention, the term "kink angle" refers to an angle of the bent fiber with respect to its straight line form. The average kink angle is an average value of degrees of bend with respect to fibers in a straight line form, for example, an average value of angles defined in Olson, J et al., "An Analyzer for Fibre Shapeand Length" (Journal of Pulp and Paper Science, Vol. 21, No. 11, 1995, pages J367 to J373). The average kink angle in the present invention can be measured with, for example, a fiber tester manufactured by Lorentzen & Wettre Ltd. after the pulp is sufficiently disintegrated in water.

The (A) pulp having specific physical property parameters (the proportion of the fine content and the average kink angle), for use in the present invention, can be obtained by stirring the pulp in water preferably at a low temperature at a relatively high pulp solid concentration of preferably 10 mass% or more, and more preferably 20 mass% or more if the average kink angle is less than 55 degrees. If beating treatment is performed at a relatively low pulp solid content concentration, or nanonization treatment is performed beyond necessity, the proportion of the fine content is, for example, more than 30%, which is not preferable.

In the present application, the pulp solid content concentration is calculated from the mass of pulp and water by the following equation. Pulp solid content concentration (%) = mass of pulp solid content/(mass of water + mass of pulp solid content) × 100

The average aspect ratio of the (A) pulp for use in the present invention is preferably 10 or more and less than 100, and more preferably 20 or more and less than 90, from the viewpoint of exhibiting functions as a reinforcing material. The average aspect ratio of the (A) pulp can be reduced by, for example, performing pulverization. The average aspect ratio can be calculated from the average fiber length and the average fiber diameter by the following equation. The average aspect ratio = average fiber length/average fiber diameter

The average fiber length and the average fiber diameter can be measured with a fiber tester manufactured by Lorentzen & Wettre Ltd. after the pulp is sufficiently disintegrated in water.

In the present invention, the proportion of long fibers (hereinafter, also referred to as a "long fiber content") in all pulp fibers is preferably 40% or more, more preferably 45% or more, and still more preferably 50% or more. If the proportion of the long fiber content is excessively small, the effect of improving the impact strength may be reduced, and the effect of improving the maximum stress may be reduced. The upper limit value of the proportion of the long fiber content is not particularly limited, but is 100% or less in practice. Here, the term "long fibers" in the present specification refers to pulp fibers with a fiber length of 0.5 mm or more. The proportion of the long fiber content can be calculated by measuring the fiber length distribution of pulp fibers with, for example, a fiber tester manufactured by Lorentzen & Wettre Ltd. after the pulp is sufficiently disintegrated in water.

### (Pulp raw material)

The (A) pulp is roughly classified into wood pulp and non-wood pulp according to a raw material (pulp raw material) used. The wood pulp may be produced by pulping a wood raw material. Examples of the wood raw material include softwood such as Japanese red pine, Japanese black pine, Sakhalin fir, Yezo spruce, Pinus koraiensis, Japanese larch, Abies firma, southern Japanese hemlock, Japanese cedar, white cedar, Japanese larch, Veitch's silver fir, hondo spruce, cypress, Douglas fir, hemlock, white fir, spruce, cedar, pine, Merkus Pine and radiator pine, and mixtures thereof; and hardwood such as beech, birch, alder, oak, Machilus thunbergii, pasania, white birch, cottonwood, poplars, tamo, Japanese poplar, eucalyptus, mangrove, lauan and acacia, and mixtures thereof.

The method for pulping the wood raw material is not particularly limited, and examples thereof include pulping methods that are commonly used in the papermaking industry. Wood pulp can be classified according to the pulping method, and examples thereof include chemical pulp obtained by digestion using a method such as a kraft method, a sulfite method, a soda method or a polysulfide method; mechanical pulp obtained by pulping by the mechanical power of a refiner, a grinder or the like; semi-chemical pulp obtained by performing pretreatment with chemicals, and then pulping by mechanical power; waste paper pulp; and deinked pulp. The wood pulp may be in an unbleached state (before bleaching) or in a bleached state (after bleaching).

Examples of the non-wood-derived raw material include cotton, hemp, sisal hemp, Manila hemp, flax, straw, bamboo, bagasse, kenaf, sugar cane, corn, rice straw, mulberry (kozo), and mitsumata.

Among them, wood raw materials which are derived mainly from Eucalyptus of Myrtaceae, Larix/Pinus/Pseudotsuga/ Picea of Pinaceae, Cryptomeria/Cunninghamia/Chamaecyparis of Cupressaceae and Acacia of Leguminosae inhabiting broadly distributed environments and having a variety of genetic resources and which have gained forest certification and used for papermaking are preferably used from the viewpoint of fiber characteristics after pulping, which may be influenced by a plurality of factors originating from tree species and solids of wood as raw materials, such as factors such as influences of the thickness of cell walls and the amount of contained lignin in relation to kink angle characteristics in the present invention, and a tree species-specific fiber length and the crystallinity of the relevant fibers in relation to the fiber length. The pulp raw materials for papermaking which have gained forest certification are more preferable because they are based on select trees that have been bred and selected through many years of cross-fertilization of a variety of genetic resources by human beings, there is little variation in various characteristics of the wood raw material between individuals, and wood produced by sustainable operations capable of reproducing tree species that are likely to stably exhibit the above fiber characteristics by breeding. For such wood materials, examples of the Eucalyptus of Myrtaceae include Eucalyptus (hereinafter, abbreviated as E.) calophylla, E. citriodora, E. diversicolor, E. globulus, E. grandis, E. gummifera, E. marginata, E. nesophila, E. nitens, E. macarthurii, E. fastigata, E. amygdalina, E. camaldulensis, E. delegatensis, E. gigantea, E. muelleriana, E. obliqua, E. regnans, E. sieberiana, and E. viminalis. Examples of the Larix of Pinaceae include Larix (hereinafter, abbreviated as L.) leptolepis, L. laricina, L. occidentalis, L. decidua and L. gmelinii, examples of the Pinus of Pinaceae include Pinus (hereinafter, abbreviated as P.) radiata, examples of the Pseudotsuga of Pinaceae include Pseudotsuga menziesii and Pseudotsuga japonica, and examples of the Picea of Pinaceae include Picea mariana, Picea sitcheensis and Picea abies. Examples of the Cryptomeria of Cupressaceae include Cryptomeria japonica, examples of the Cunninghamia of Cupressaceae include Cunninghamia lanceolata, and examples of the Chamaecyparis of Cupressaceae include Chamaecyparis obtuse and Chamaecyparis pisifera. Examples of the Acacia of Leguminosae include Acacia (hereinafter, abbreviated as A.) mangium. Among them, E. globulus and E. grandis belonging to Eucalyptus of Myrtaceae, P. radiata belonging to Pinus of Pinaceae, A. mangium belonging to Acacia of Leguminosae and the like are tree species that have been bred for many years. They are rich in diversity, allows wood pulp raw materials in the present invention to be easily obtained, and are thus preferable.

In the present invention, for example, the phrase "pulp raw material derived mainly from eucalyptus" means that the pulp raw material contains eucalyptus at 51 mass% or more.

The (A) pulp, which may be unbeaten or beaten, may be selected according to the desired physical properties of a resin composition. It is preferable to use unbeaten pulp from the viewpoint that the proportion of the fine content can be kept low, and the number of processes is decreased.

The (A) pulp may be water-containing pulp containing water at more than 15%, or may be dry pulp. Water-containing pulp containing water is preferable from the viewpoint of ease of feeding to an extruder, and dry pulp is preferable from the viewpoint of a discharge rate, that is, an increased production rate. Whether to use water-containing pulp or dry pulp may be appropriately selected according to the purpose. In the present invention, the term "dry pulp" includes both an absolute-dry state and an air-dried state, and thus means pulp having a pulp water content of 15% or less. When the (A) pulp is water-containing pulp, the mass of water contained in the pulp is preferably 50 mass% or less, more preferably 0.1 mass% or more and 45 mass% or less, still more preferably 0.5 mass% or more and 40 mass% or less, and particularly preferably 1 mass% or more and 35 mass% or less with respect to total solid content mass of the (A) pulp, the (B) thermoplastic resin modified with a hydrophilic functional group described later, and the (C) thermoplastic resin which is not modified with a hydrophilic functional group, from the viewpoint of drying efficiency. When the (A) pulp is dry pulp, the mass of water contained in the pulp is preferably 0.1 mass% or more and 10 mass% or less, and more preferably 0.2 mass% or more and 8 mass% or less with respect to total solid content mass of the (A) pulp, the (B) thermoplastic resin modified with a hydrophilic functional group described later, and the (C) thermoplastic resin which is not modified with a hydrophilic functional group.

### (B) Thermoplastic resin modified with hydrophilic functional group

The (B) thermoplastic resin is required to be modified with a hydrophilic functional group. In the present invention, the term "hydrophilicity" means good affinity for water and a cellulose surface forming pulp. Examples of the hydrophilic functional group include a hydroxyl group, a carboxy group, a carbonyl group, an amino group, an amide group, and a sulfo group. Examples of the (B) thermoplastic resin modified with a hydrophilic functional group include base-modified polyolefins and acid-modified polyolefins, and specific examples thereof include maleic anhydride-modified polypropylene (MAPP) and maleic anhydride-modified polyethylene (MAPE).

From the viewpoint of easy dispersibility, the melting point of the (B) thermoplastic resin for use in the present invention is preferably equal to or lower than the melting point of the (C) thermoplastic resin which is not modified with a hydrophilic functional group described later. Here, for example, the melting point of the maleic anhydride-modified polypropylene (MAPP) is 150°C, and the melting point of the maleic anhydride-modified polyethylene (MAPE) is 120°C. For example, polypropylene (bPP) as the (C) thermoplastic resin has a melting point of 160 to 165°C.

In the present invention, the (B) thermoplastic resin has a function as a compatibilizing resin. The compatibilizing resin functions to enhance uniform mixing and adhesion between the two components different in hydrophobicity, i.e., the (A) pulp having different hydrophobicity and the (C) thermoplastic resin which is not modified with a hydrophilic functional group described later. In the case of a maleic anhydride-modified polyolefin, examples of the factor that determines the characteristics as a compatibilizing resin include the addition amount of dicarboxylic acid and the weight average molecular weight of a polyolefin resin as a base material. A polyolefin resin with a large addition amount of dicarboxylic acid enhances compatibility with a hydrophilic polymer such as cellulose forming the pulp, but undergoes a decreased molecular weight as a resin in the process of the addition, leading to a decrease in strength of the molded product. For optimum balance, the addition amount of dicarboxylic acid is 20 to 100 mg KOH/g, and more preferably 45 to 65 mg KOH/g. If the addition amount is small, the number of points at which interaction with hydroxyl groups of cellulose, and hydroxyl groups or modifying functional groups contained in the modified cellulose in the resin occurs decreases. If the addition amount is large, strength as a reinforced resin is not achieved due to self-aggregation caused by, for example, hydrogen bonding between carboxy groups in the resin, or a decrease in molecular weight of the olefin resin as a base material which is caused by an excessive addition reaction. The molecular weight of the polyolefin resin is preferably 35,000 to 250,000, and more preferably 50,000 to 100,000. If the molecular weight is below the range, strength as a resin decreases, and if the molecular weight is above the range, the viscosity significantly increases during melting, so that workability during kneading is deteriorated, and molding defects occur.

The blending amount of the (B) thermoplastic resin is not particularly limited, but is preferably 1 to 100 mass%, and more preferably 10 to 80 mass% with respect to solid content mass of the (A) pulp (100 mass%). It is considered that a blending amount of more than 100 mass%, which exceeds an amount required for forming an interface between cellulose and the resin, thus leads to a decrease in strength of the resulting resin composition.

The (B) thermoplastic resin may be used alone, or used as a mixture of two or more thereof. In the case of use as a grafted product of one or more polymers and a polyolefin, the polyolefin resin for forming the grafted product is not particularly limited. Polyethylene, polypropylene, polybutylene or the like can be used from the viewpoint of easily producing the grafted product.

### (C) Thermoplastic resin which is not modified with hydrophilic functional group

The (C) thermoplastic resin is required not to be modified with a hydrophilic functional group. In the present specification, the (C) thermoplastic resin which is not modified with a hydrophilic functional group may be referred to as a "base resin". The melting point of the (C) thermoplastic resin is preferably 250°C or lower for avoiding thermal decomposition of cellulose. The lower limit is not particularly limited, but is preferably 60°C or higher, and more preferably 80°C or higher.

Examples of the (C) thermoplastic resin include polyolefins such as homopolypropylene (hPP, melting point: 165 to 170°C), high-density polyethylene (HDPE, melting point: 130 to 135°C), low-density polyethylene (LDPE, melting point: 95 to 135°C), and linear low-density polyethylene (L-LDPE, melting point: 124°C), and block copolymers such as block polypropylene (bPP, melting point: 160 to 165°C).

The blending amount of the (C) thermoplastic resin is not particularly limited, but is preferably 66 to 9,900 mass%, and more preferably 100 to 1,900 mass% with respect to solid content mass of the (A) pulp (100 mass%), from the viewpoint of fluidity of the composite. The blending amount of the (C) thermoplastic resin is preferably equal to or more than the blending amount of the (B) thermoplastic resin from the viewpoint of strength.

In the present invention, an elastomer may be used in combination as the (C) thermoplastic resin.

As the elastomer, any of common thermoplastic elastomers can be selected according to a purpose. Examples thereof include polyurethane-based elastomers, polyester-based elastomers, polyamide-based elastomers, olefin-based elastomers, and styrene-based elastomers. One type of the elastomers may be used alone, or two or more types of the elastomers may be used in combination.

### (Kneading step)

The method for producing a resin composite according to the present invention includes a kneading step of kneading the following (A) to (C): In the kneading step according to the present invention, from the viewpoint of uniform dispersion of pulp, (A) to (C) are kneaded preferably in a temperature range including at least that of a 100°C or higher and no higher than a melting point of one of the resins (B) and (C) which has the highest melting point, and more preferably in a temperature range including at least that of 110°C or higher and 180°C or lower.

In the kneading step, additives such as a surfactant; a polysaccharide such as starch or alginic acid; a natural protein such as gelatin, glue or casein; an inorganic compound such as tannin, zeolite, ceramics or metal powder; a colorant; a plasticizer; a perfume; a pigment; a flow modifier; a leveling agent; a conducting agent; an antistatic agent; an ultraviolet absorber; an ultraviolet dispersant; a deodorant and an antioxidant may be blended if necessary. The content ratio of arbitrary additives may be appropriately determined as long as the effect of the present invention is not impaired.

The kneader for use in the kneading step is not particularly limited. It is preferable to use a single-screw or multi-screw kneader. It is preferable to use a twin-screw kneader from the viewpoint of productivity.

In injection of (A) to (C) and additives blended if necessary into the kneader, various marketed feeders and side feeders can be used. In the case where the (B) thermoplastic resin and the (C) thermoplastic resin are powdered in advance, the (A) pulp, the (B) thermoplastic resin, the (C) thermoplastic resin, and an antioxidant and the like blended if necessary can be mixed by a marketed mixer or the like before the injection. Even in the case where the resin is not powdered, the injection can be performed by preparing a plurality of feeders including, for example, a feeder for pellets and a feeder for the (A) pulp. In the kneading step, the blending amount of the solid content of the (A) pulp injected into the kneader is preferably 1 to 60 mass%, and more preferably 3 to 50 mass% with respect to total amount of the solid content of (A), (B), (C) and the additives blended if necessary.

The set temperature of melt-kneading can be adjusted according to the melting temperatures of the (B) thermoplastic resin and the (C) thermoplastic resin used. The heating set temperature during melt-kneading is preferably a minimum processing temperature recommended by the thermoplastic resin supplier ± about 10°C. By setting the mixing temperature within this temperature range, the (A) pulp and the resins can be uniformly mixed.

The resin composition discharged from the kneader may be processed into a pellet shape. For example, in the case of processing into a pellet shape, a die is attached to the kneader, and a strand discharged from a discharge hole is cut by a cutting mechanism, whereby size-adjusted pellets can be obtained. The pellets may be prepared by a hot-cutting method. As the cutting mechanism, various known cutting mechanisms such as a rotary cutter can be used without limitation.

According to the present invention, it is possible to provide a resin composition which has high bending strength and a high bending elastic modulus, which are well balanced with impact strength. In addition, it is possible to provide a method for producing a resin composition capable of obtaining the resin composition.

### (Uses)

A forming material and a molded product (molding material and molded article) can be produced using the resin composition of the present invention. Examples of the shape of the molded product include various shapes such as a film shape, a sheet shape, a plate shape, a pellet shape, a powder shape, and a three-dimensional structure. As a molding method, die molding, injection molding, extrusion molding, hollow molding, foam molding or the like can be used.

The molded products (molded articles) can be used in the field of household appliances in addition to the field of mobility.

They can be effectively used as interior materials, exterior materials, structural materials and the like of transportation equipment such as automobiles, trains, vessels and airplanes; housings, structural materials, internal parts and the like of electrical appliances such as personal computers, televisions, telephones and clocks; housings, structural materials, internal parts and the like of mobile communication equipment such as mobile phones; housings, structural materials, internal parts and the like of portable music reproducing equipment, video reproducing equipment, printing equipment, copying equipment, sporting goods and the like; construction material; office equipment such as stationery, cases, containers, and the like.

### Examples

Hereinafter, the present invention will be described in more detail by way of examples, but the present invention is not limited thereto.

### (Measurement of average fiber length, average fiber diameter, fine content proportion, average kink angle and fiber length distribution of pulp fibers)

The average fiber length, the average fiber diameter, the fine content, the average kink angle and the fiber length distribution of pulp fibers were measured using a fiber tester manufactured by Lorentzen & Wettre Ltd. In the present invention, the term "fiber length" refers to a length-weighted average fiber length based on ISO16065. In the present invention, the term "fiber diameter" refers to a length-weighted average fiber diameter. Specifically, to 0.15 g of pulp on an absolute-dry mass basis, water was added to a total amount of 300 g, and the mixture was stirred with a homodisper at a rotation speed of 3,000 rpm for 2 minutes, followed by measurement with a fiber tester.

In the present invention, the term "fine content" refers to a fiber having a fiber length of 0.2 mm or less.

In the present invention, the term "long fiber content" refers to a fiber having a fiber length of 0.5 mm or more. The proportion of the long fiber content was separately calculated as follows from a fiber length distribution obtained by performing measurement in the manner described above. Proportion of long fiber content = (number of long fibers)/(total number of fibers) × 100

### (Preparation of test piece)

150 g of a pellet-shaped resin molded articles obtained in each of examples, comparative examples and reference examples was injected into a small molding machine ("MC15" manufactured by Xplore Instruments BV), and a bar test piece was molded under conditions of a heating barrel (cylinder) temperature of 200°C and a die temperature of 40°C (thickness: 4 mm, parallel portion length 80 mm).

### (Measurement of bending elastic modulus and maximum stress)

The elastic modulus and the maximum stress of the test piece obtained as described above were measured at a testing rate of 10 mm/min and a fulcrum-to-fulcrum distance of 64 mm using a precision universal tester ("Autograph AG-Xplus" manufactured by Shimadzu Corporation). Table 1 shows the results.

### (Izod impact test)

A notch having a depth of 2 mm was made at the central portion of the test piece obtained as described above. An Izod impact tester ("Impact Tester IT" manufactured by Toyo Seiki Seisaku-sho, Ltd.) was used. A hammer was selected according to JIS K 7110, the test piece was struck on the notch side to make cracks develop from the notch, and the impact strength was calculated. The larger the value, the better the impact resistance.

### (Density)

The density of the test piece obtained as described above was measured by a gas displacement method using AccuPycII manufactured by Micromeritics Instrument Corporation. Table 1 shows the results.

### (Kneader and operating conditions used in production of resin composition)

Twin-screw kneader "MFU15TW-45HG-NH" manufactured by TECHNOVEL CORPORATION
Screw diameter: 15 mm, L/D: 45, treatment speed: 300 g/hour
The screw rotation speed was 200 rpm, and the set temperature was appropriately changed according to a resin used, and operations were carried out at 120 to 160°C.

### (Materials used in production of resin composition)

(A) Pulp
(B) Thermoplastic resin modified with hydrophilic functional group
   - MAPP: (Acid-modified polypropylene H1000P manufactured by Toyobo Co., Ltd., melting point: 150°C)
(C) Thermoplastic resin which is not modified with hydrophilic functional group (also referred to as a "base resin").
   - bPP: (Polypropylene J466HP manufactured by Prime Polymer Co., Ltd., melting point: 160 to 165°C)
   - hPP (high-elasticity PP): (Polypropylene J108M manufactured by Prime Polymer Co., Ltd., melting point: 165 to 170°C)
   - HDPE: (Polypropylene HJ580 manufactured by Japan polyethylene Corporation., melting point: 130 to 135°C)
   - L-LDPE: Polyethylene ULTZEX 20200 J manufactured by Prime Polymer Co., Ltd., melting point: 124°C)
(D) Antioxidant: (Irganox 1010 manufactured by BASF SE)

### (Example 1)

### (Treatment of pulp)

Water was added to a pulp raw material derived mainly from eucalyptus (E. grandis), and the mixture was pulverized with a Henschel mixer to obtain (A) pulp having a fine content of 14.5%, an average kink angle of 67.2 degrees, an average aspect ratio of 42.1, a long fiber content of 65.3%, and a water content of 40%.

### (Kneading step)

The above-described (A) pulp, (B) a thermoplastic resin (MAPP), (C) a base resin (bPP) and (D) an antioxidant were mixed such that the solid content mass ratio of (A)/(B)/(C)/(D) was 27/5/67/1. The mass of (A) in this mass ratio is the mass as an absolute-dry product. The mass of water contained in the (A) pulp was 18.2 mass% with respect to total solid content mass of (A), (B) and (C). The obtained mixture was injected into a kneader and kneaded at a set temperature of 160°C to obtain a resin composition. Subsequently, this was pelletized with a pelletizer to obtain a pellet-shaped resin composition (molded article).

### (Example 2)

Except that a pulp raw material derived mainly from acacia (A. mangium) was used in treatment of the pulp, the same procedure as in Example 1 was carried out to obtain (A) pulp having a fine content of 16.3%, an average kink angle of 60.6 degrees, an average aspect ratio of 36.8, a long fiber content of 53.8%, and a water content of 40%. Except that this pulp was used, the same kneading step as in Example 1 was carried out to obtain a pellet-shaped resin composition (molded article). The mass of water contained in the (A) pulp was 18.2 mass% with respect to total solid content mass of (A), (B) and (C).

### (Example 3)

Except that a pulp raw material derived mainly from acacia (A. mangium) different in production area from that in Example 2 was used in treatment of the pulp, the same procedure as in Example 1 was carried out to obtain (A) pulp having a fine content of 13.3%, an average kink angle of 61.8 degrees, an average aspect ratio of 38.1, a long fiber content of 69.6%, and a water content of 40%. Except that this pulp was used, the same kneading step as in Example 1 was carried out to obtain a pellet-shaped resin composition (molded article). The mass of water contained in the (A) pulp was 18.2 mass% with respect to total solid content mass of (A), (B) and (C).

### (Example 4)

Except that a pulp raw material derived mainly from pine (P. radiata) was used in treatment of the pulp, the same procedure as in Example 1 was carried out to obtain (A) pulp having a fine content of 21.9%, an average kink angle of 65.2 degrees, an average aspect ratio of 69.8, a long fiber content of 52.0%, and a water content of 40%. Except that this pulp was used, the same kneading step as in Example 1 was carried out to obtain a pellet-shaped resin composition (molded article). The mass of water contained in the (A) pulp was 18.2 mass% with respect to total solid content mass of (A), (B) and (C).

### (Example 5)

Except that in the kneading step, the (A) pulp, the (B) thermoplastic resin (MAPP), the (C) base resin (bPP) and the (D) antioxidant were mixed such that the solid content mass ratio of (A)/(B)/(C)/(D) was 51/1/47/1, the same procedure as in Example 1 was carried out to obtain a pellet-shaped resin composition (molded article). The mass of water contained in the (A) pulp was 34.3 mass% with respect to total solid content mass of (A), (B) and (C).

### (Example 6)

Except that in the kneading step, the (A) pulp, the (B) thermoplastic resin (MAPP), the (C) base resin (bPP) and the (D) antioxidant were mixed such that the solid content mass ratio of (A)/(B)/(C)/(D) was 11/5/83/1, the same procedure as in Example 1 was carried out to obtain a pellet-shaped resin composition (molded article). The mass of water contained in the (A) pulp was 7.4 mass% with respect to total solid content mass of (A), (B) and (C).

### (Example 7)

Except that in the kneading step, the (A) pulp, the (B) thermoplastic resin (MAPP), the (C) base resin (bPP) and the (D) antioxidant were mixed such that the solid content mass ratio of (A)/(B)/(C)/(D) was 22/5/72/1, the same procedure as in Example 1 was carried out to obtain a pellet-shaped resin composition (molded article). The mass of water contained in the (A) pulp was 14.8 mass% with respect to total solid content mass of (A), (B) and (C).

### (Example 8)

Except that in the kneading step, hPP was used in place of bPP as the (C) base resin, the same procedure as in Example 1 was carried out to obtain a pellet-shaped resin composition (molded article).

### (Example 9)

Except that in the kneading step, hPP was used in place of bPP as the (C) base resin, and an elastomer (manufactured by Mitsui Chemicals, Inc., TAFMER DF740, melting point: 55°C) was used in combination, where the mass ratio of hPP : elastomer was 49 : 18, the same procedure as in Example 1 was carried out to obtain a pellet-shaped resin composition (molded article). The mass of water contained in the (A) pulp was 18.2 mass% with respect to total solid content mass of (A), (B) and (C).

### (Example 10)

Except that in the kneading step, HDPE was used in place of bPP as the (C) base resin, and operations were carried out at a set temperature of 130°C, the same procedure as in Example 1 was carried out to obtain a pellet-shaped resin composition (molded article).

### (Example 11)

Except that in the kneading step, L-LDPE was used in place of bPP as the (C) base resin, and operations were carried out at a set temperature of 120°C, the same procedure as in Example 1 was carried out to obtain a pellet-shaped resin composition (molded article).

### (Comparative Example 1)

Except that in treatment of the pulp, a pulp raw material derived mainly from beech was pulverized in advance using "UGO3-280XKFT" manufactured by Horai Co., Ltd., and was then classified with a 400-mesh screen, the same procedure as in Example 1 was carried out to obtain (A) pulp having a fine content of 99.6%, an average kink angle of 94 degrees, an average aspect ratio of 5.8, a long fiber content of less than 0.1%, and a water content of 40%. Except that this pulp was used, the same kneading step as in Example 1 was carried out to obtain a pellet-shaped resin composition (molded article). The mass of water contained in the (A) pulp was 18.2 mass% with respect to total solid content mass of (A), (B) and (C).

### (Comparative Example 2)

Except that in the kneading step, the (A) pulp, the (B) thermoplastic resin (MAPP), the (C) base resin (bPP) and the (D) antioxidant were mixed such that the solid content mass ratio of (A)/(B)/(C)/(D) was 51/1/47/1, the same procedure as in Comparative Example 1 was carried out to obtain a pellet-shaped resin composition (molded article). The mass of water contained in the (A) pulp was 34.3 mass% with respect to total solid content mass of (A), (B) and (C).

### (Comparative Example 3)

Except that in the kneading step, hPP was used in place of bPP as the (C) base resin, the same procedure as in Comparative Example 2 was carried out to obtain a pellet-shaped resin composition (molded article).

### (Comparative Example 4)

Except that in treatment of the pulp, a pulp raw material derived mainly from pine (P. radiata), which had been sufficiently stirred in water at a pulp solid content concentration of 3 mass%, was put in a Henschel mixer, and dried with stirring, the same procedure as in Example 1 was carried out to obtain (A) pulp having a fine content of 10.3%, an average kink angle of 51.7 degrees, an average aspect ratio of 69.4, a long fiber content of 36.8%, and a water content of 40%. Except that this pulp was used, the same kneading step as in Example 1 was carried out to obtain a pellet-shaped resin composition (molded article). The mass of water contained in the (A) pulp was 18.2 mass% with respect to total solid content mass of (A), (B) and (C).

### (Reference Examples 1 to 4)

A bPP neat resin, a hPP neat resin, a HDPE neat resin and a L-LDPE neat resin were each used alone, and pelletized with a pelletizer to obtain a pellet-shaped resin composition (molded article).

**[Table 1]**

| | (A) Pulp | | | | | | (B) Thermoplastic resin | (C) Base resin | Resin molded product | | | |
|---|---|---|---|---|---|---|---|---|---|---|---|---|
| | Pulp raw material | Blending amount | Fine content | Average kink angle | Average aspect ratio | Long fiber content | Type | Type | Bending elastic modulus | Bending maximum stress | Izod impact strength | Density |
| | | [%] | [%] | [degree] | | [%] | | | [GPa] | [MPa] | [kJ/m²] | [g/cm³] |
| Example 1 | Derived mainly from Eucalyptus | 27 | 14.5 | 67.2 | 42.1 | 65.3 | MAPP | bPP | 2.1 | 47.4 | 8.6 | 1.02 |
| Example 2 | Derived mainly from Acacia | 27 | 16.3 | 60.6 | 36.8 | 53.8 | MAPP | bPP | 2.1 | 47.8 | 7.9 | 1.02 |
| Example 3 | Derived mainly from Acacia | 27 | 13.3 | 61.8 | 38.1 | 69.6 | MAPP | bPP | 2.1 | 47.6 | 8.4 | 1.02 |
| Example 4 | Derived mainly from Pine | 27 | 21.9 | 65.2 | 69.8 | 52.0 | MAPP | bPP | 2.1 | 47.1 | 8.0 | 1.02 |
| Example 5 | Derived mainly from Eucalyptus | 51 | 14.5 | 67.2 | 42.1 | 65.3 | MAPP | bPP | 3.7 | 52.8 | 3.9 | 1.14 |
| Example 6 | Derived mainly from Eucalyptus | 11 | 14.5 | 67.2 | 42.1 | 65.3 | MAPP | bPP | 1.0 | 31.0 | 11.3 | 0.94 |
| Example 7 | Derived mainly from Eucalyptus | 22 | 14.5 | 67.2 | 42.1 | 65.3 | MAPP | bPP | 1.6 | 41.1 | 8.4 | 0.98 |
| Example 8 | Derived mainly from Eucalyptus | 27 | 14.5 | 67.2 | 42.1 | 65.3 | MAPP | hPP | 3.2 | 74.2 | 3.8 | 1.03 |
| Example 9 | Derived mainly from Eucalyptus | 27 | 14.5 | 67.2 | 42.1 | 65.3 | MAPP | hPP (used in combination with elastomer) | 2.0 | 47.8 | 7.5 | 1.01 |
| Example 10 | Derived mainly from Eucalyptus | 27 | 14.5 | 67.2 | 42.1 | 65.3 | MAPP | HDPE | 2.7 | 53.6 | 4.9 | 1.10 |
| Example 11 | Derived mainly from Eucalyptus | 27 | 14.5 | 67.2 | 42.1 | 65.3 | MAPP | L-LDPE | 1.0 | 29.7 | 9.4 | 1.00 |
| Comparative Example 1 | Derived mainly from Beech | 27 | 99.6 | 94 | 5.8 | < 0.1 | MAPP | bPP | 1.4 | 34.3 | 7.9 | 1.01 |
| Comparative Example 2 | Derived mainly from Beech | 51 | 99.6 | 94 | 5.8 | < 0.1 | MAPP | bPP | 2.8 | 42.8 | 3.0 | 1.13 |
| Comparative Example 3 | Derived mainly from Beech | 51 | 99.6 | 94 | 5.8 | < 0.1 | MAPP | hPP | 4.3 | 57.9 | 1.9 | 1.15 |
| Comparative Example 4 | Derived mainly from Pine | 27 | 10.3 | 51.7 | 69.4 | 36.8 | MAPP | bPP | 1.8 | 42.0 | 6.6 | 1.00 |
| Reference Example 1 | None | - | - | - | - | - | None | bPP | 0.7 | 24.4 | 56.1 | 0.89 |
| Reference Example 2 | None | - | - | - | - | - | None | hPP | 1.8 | 50.6 | 3.4 | 0.91 |
| Reference Example 3 | None | - | - | - | - | - | None | HDPE | 0.7 | 23.4 | 3.0 | 0.96 |
| Reference Example 4 | None | - | - | - | - | - | None | L-LDPE | 0.2 | 8.9 | 67.0 | 0.92 |

As shown in Table 1, it can be seen that the resin compositions of Examples 1 to 11 contain pulp, a thermoplastic resin modified with a hydrophilic functional group, and a thermoplastic resin which is not modified with a hydrophilic functional group, and the resin compositions satisfy any of (condition 1): an elastic modulus of 2 GPa or more and an impact strength of 4.5 kJ/m² or more, (condition 2): an elastic modulus of 1 GPa or more and an impact strength of 8 kJ/m² or more, and (condition 3): an elastic modulus of 3 GPa or more and an impact strength of 3.5 kJ/m² or more, and have high bending strength and a high bending elastic modulus, which are well balanced with impact strength.

## Claims

1. A resin composition comprising pulp, a thermoplastic resin modified with a hydrophilic functional group, and a thermoplastic resin which is not modified with a hydrophilic functional group, the resin composition satisfying any of the following conditions:
(condition 1) an elastic modulus of 2 GPa or more and an impact strength of 4.5 kJ/m² or more;
(condition 2) an elastic modulus of 1 GPa or more and an impact strength of 8 kJ/m² or more; and
(condition 3) an elastic modulus of 3 GPa or more and an impact strength of 3.5 kJ/m² or more.

2. The resin composition according to claim 1,
wherein the pulp includes pulp derived from one or more tree species selected from the group consisting of Eucalyptus, Larix, Pinus, Pseudotsuga, Picea, Cryptomeria, Cunninghamia, Chamaecyparis and Acacia.

3. A method for producing a resin composition, comprising a kneading step of kneading the following (A) to (C) :
(A) pulp in which a proportion of pulp fibers with a fiber length of 0.2 mm or less in all pulp fibers is 30% or less, and an average kink angle is 55 degrees or more;
(B) a thermoplastic resin modified with a hydrophilic functional group; and
(C) a thermoplastic resin which is not modified with a hydrophilic functional group.

4. The method for producing a resin composition according to claim 3, wherein an average aspect ratio of the (A) pulp is 10 or more and less than 100.

5. The method for producing a resin composition according to claim 3, wherein in the kneading step, the kneading is performed in a temperature range including at least that of a 100°C or higher and no higher than a melting point of one of the resins (B) and (C) which has the highest melting point.

6. The method for producing a resin composition according to claim 3, wherein the mass of water contained in the (A) pulp is 50 mass% or less with respect to total solid content mass of the (A) to (C).
